# EUROPEAN PATENT SPECIFICATION

(11) **EP 1 408 380 B1**
(45) Date of publication and mention of the grant of the patent: **09.01.2008**
(21) Application number: 01988117.6
(22) Date of filing: 27.11.2001
(51) Int. Cl.: G03H 1/00, G03H 1/02, C25D 7/00, B29C 37/00

(54) **METHOD OF PRODUCING A PROTECTIVE SECURITY HOLOGRAM**
VERFAHREN ZUR ERZEUGUNG EINES SICHERHEITSSCHUTZ-HOLOGRAMMS
PROCEDE DE FABRICATION D'UN HOLOGRAMME DE SECURITE

(30) Priority: 19.06.2001 UA 01064261
(43) Date of publication of application: 14.04.2004
(73) Proprietor: Limited Liability Company "Specialized Enterprise Holography", Kiev, 01021 (UA)
(72) Inventor: BEYLIN, Georgiy Volodymyrovich, Kiev, 02222 (UA); IVANOVSKIY, Andriy Albertovich, Kiev, 04116 (UA); SIDORENKO, Yuriy Griygorovich, Kiev, 01033 (UA); TVERDOKHLIB, Igor Viktorovich, Kiev, 03028 (UA); TYMOSHENKO, Andriy Mykolayovich, Kiev, 04119 (UA)
(74) Representative: Hano, Christian
(86) International application number: PCT/UA2001/000048
(87) International publication number: WO 2002/103457

(56) References cited:
- RU-C1- 2 165 638
- US-A- 4 023 037
- US-A- 5 426 520
- US-A- 5 640 255
- GALE M.T. HERZIG H.P.: "MICRO OPTICS - Chap. 6 : Replication" 1997, TAYLOR & FRANCIS , XP002322732 * pages 158-159 * * pages 165-166; figures 6.2,6.4,6.10 *
- BARTOLINI R ET AL: "EMBROSSED HOLOGRAM MOTION PICTURES FOR TELEVISION PLAYBACK" APPLIED OPTICS, OPTICAL SOCIETY OF AMERICA,WASHINGTON, US, vol. 9, no. 10, 1 October 1970 (1970-10-01), pages 2283-2290, XP000608567 ISSN: 0003-6935
- BURNS J R: "LARGE-FORMAT EMBOSSED HOLOGRAMS" PROCEEDINGS OF THE SPIE, SPIE, BELLINGHAM, VA, US, vol. 523, 23 January 1985 (1985-01-23), pages 7-14, XP009041314 ISSN: 0277-786X

## Description

The proposed invention relates to method of producing protective security holograms.

From US 5623347 is known a method of producing holograms for labeling objects including the following operations: producing the desired image, forming the holograms of the desired image by way of creating relief structure of the desired image on the surface of matrix material, and further production of protective holograms of the desired image using the matrix.

The drawback of the above method is in its insufficient manufacturability, which is due to necessity to provide electroconductive layer on the matrix surface. Chemical nickel-plating is used to create such electroconductive layer on the matrix surface. On one hand, this operation is not sufficiently controllable, therefore, the layer turns to have different thickness over the matrix area, and, on the other hand, it is very sophisticated technologically and quite expensive, which makes the use of this method limited.

It is known a method of producing a protective security hologram, which includes the following operations: producing the desired image, recording a hologram of the desired image, producing metal matrix of the desired image hologram, further replication of a protective security hologram on polymer film by way of matrix embossing (Joseph R. Burns., "Large format embossing holograms", Proceedings of SPIE, vol. 523).

The method described above provides for optical recording of images (optical recombination) with further creation of the electroconductive layer on the surface of recorded hologram, which is necessitated by the need to use the operating surface of hologram replicating machine in full and to ensure required number of repetitions. Thus, electroconductive layer is created after recording the hologram or after optical recombination. Such necessity significantly decreases the manufacturability of the method. For example, in case if a desired image comprises large number of individual small images, sophisticated operation of optical recording of holograms should be repeated the number of times equal to the number of individual holograms contained in the desired image. An error in any operation of described method causes the need to repeat the whole technological cycle. Creating electroconductive layer is required to enable production of the matrix using an electroforming process.

Publication of Gale M.T. and Herzig H.P. in "Micro optics - Chapter 6, Replication", 1997, Taylor & Francis, describes a method of producing hologram suitable for application as a security feature including the steps of recording a hologram and subsequently producing a metal matrix for embossing, wherein in Figure 6.4, one or more smaller shims are replicated into a lacquer-coated substrate to form a large-area recombination which is then electroformed to give a single large shim.

It is however not disclosed in that publication to coat the polymer substrate with an electroconductive material prior to emboss with the smaller skim.

The proposed invention shall provide more manufacturable method of producing protective security holograms. This problem is resolved by way of creating conditions for mechanical forming of replicas of a protective security hologram on the surface of electroconductive polymer or polymer layer with electroconductive coating.

The problem is resolved by the proposed invention. Like known method of producing a protective hologram, the method according to the proposed invention includes the following operations: producing a desired image, recording a hologram of the desired image, producing a metal master of the desire image hologram using an electroforming process, coating a polymer material surface with electroconductive layer, then, using mechanical recombination method, i.e. by way of the metal master embossing, producing on the surface of existing electroconductive layer, a polymer master matrix, such that it includes a number of holographic images and reproduces an image being mirror replicas of the desired image hologram producing on the polymer material surface a metal master matrix by means of an electro forming process and protective security hologram is replicated on a polymer film by embossing said metal master matrix.

The solution of the problem has become possible in the proposed method due to preliminary coating of the surface of the polymer material with electroconductive layer intended for using an electroforming process. The metal master produced replica is a metal mirror of the desired image (relief) and may be used a needed number of times to mechanically reproduce the hologram of the original relief on the surface of electroconductive polymer or polymer layer with electroconductive coating.

An electroconductive polymer or polymer with electroconductive coating layer sensitive to mechanical deformation may be used in the proposed method. Said layer is formed in a separate operation and it may be used to produce the metal master matrix, provided that its electroconductivity is sufficient to enable metal depositing by way of electroforming. Mechanical reproduction is performed on a conventional equipment - a mechanical press for recombination.

For the purpose of large scale replication of protective security holograms, an embossing shim, having longer life that the metal master matrix, may be produced using the metal master matrix by way of electroforming copying of its surface.

The essence of the invention is further explained by the schematic drawings, where:

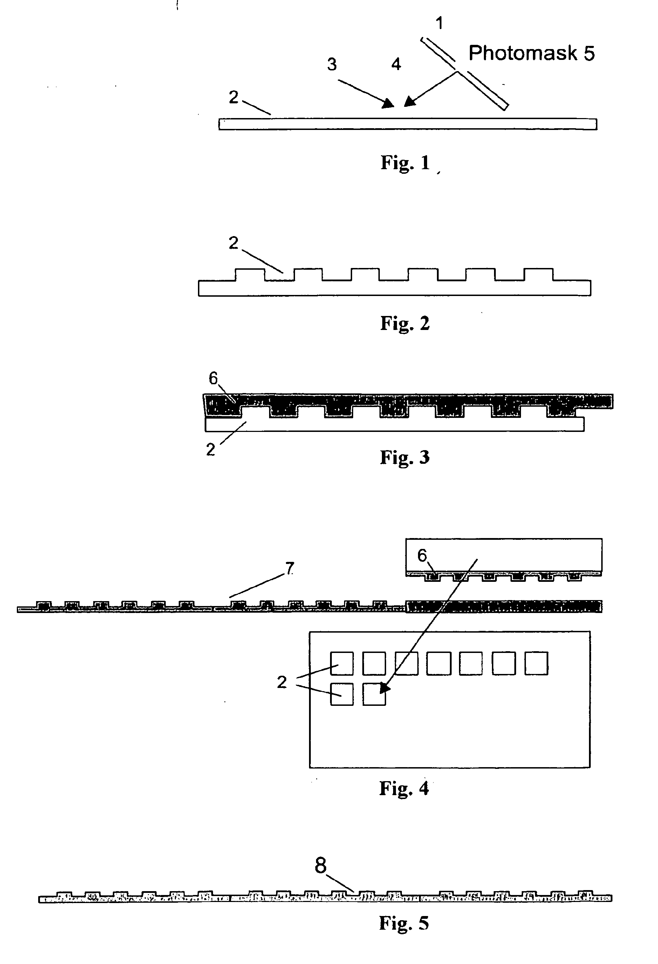

Fig. 1 schematically illustrates the operation of optical recording of each individual holographic image of which the desired image is composed.
Fig. 2 depicts technological operation of producing the desired image hologram.
Fig. 3 illustrates the operation of producing individual metal master using electroforming process.
Fig. 4 shows the operation of mechanical recombination on a surface of a polymer material coated with an electroconductive layer.
Fig. 5 schematically illustrates metal master matrix intended for holograms replication

Example. A designer creates an image of protective security hologram, consisting of a number of individual images 1. Polymer film is coated with electroconductive layer using chemical nickel-plating method, for example, by way of immersion of the film with activated surface into nickel chloride and sodium hypophosphite solution of necessary concentration until nickel coating layer of needed thickness (i.e. 0.10 to 0.15 µm) is formed on the film surface (see, f.i., N.V. Odnoralov, Electroplating in decorative arts. - M.: Iskusstvo. - 1952.- 208 p.).

Hologram 2 is created of each individual image 1 by way of its recording on photosensitive layer (not shown on the figure). Hologram 2 is formed by two laser beams 3 and 4, one of which passes through photomask 5 with desired individual image 1. Using electroforming process the image being a mirror of said individual image is formed of a metal layer starting from the photosensitive layer. Thus, individual metal master 6 is produced. Then, using mechanical recombination, a holographic image is reproduced by means of the metal master 6 of individual holographic images 2. Thus, the polymer master matrix 7 with electroconductive layer is formed. Metal master matrix 8 is created by electroforming process and is used for replication of protective security holograms. Mechanical reproduction of protective security holograms on a polymer film surface is performed using conventional equipment - a mechanical press for recombination (not shown on the figure) - by way of metal master matrix 8 embossing on the polymer film surface. In case if a large number of protective security holograms should be replicated, embossing shims may be produced of the metal master matrix 8 by way of electroforming copying of its surface.

Due to the fact that electroconductive layer is formed within separate operation of depositing and may be used directly for producing the polymer matrix 7 provided that its electric conductivity is enough for using the electroforming method, the proposed method is more manufacturable and, at the same time, enables increase in quality, because sophisticated process of repeated optical recording of holograms on photosensitive layer is replaced by simple operation of mechanical reproduction of holographic relief on electroconductive polymer layer.

## Claims

1. Method of producing protective security holograms (2) including the steps of:
- producing a desired image (1, 5),
- optically recording a surface relief image hologram (2) of the desired image,
- producing a metal master (6) from the image hologram (2) using an electroforming process,
- coating a polymer material for recombination with an electroconductive layer,
- thereafter multiple embossing the metal master (6) on to the electroconductive layer to duplicate the protective security hologram (2), thereby producing a polymer master matrix (7),
- producing a metal master matrix (8) comprising replicas of the desired protective security hologram (2) from the polymer master matrix (7) using an electroforming process, wherein the metal master matrix (8) includes a number of replicas of the image holograms (2) and
- producing the protective security holograms (2) on a polymer film surface by way of embossing the metal master matrix (8).

## Patentansprüche

1. Verfahren zur Erzeugung eines Sicherheitsschutzhologramms (2) mit den Schritten:
- Erzeugen eines gewünschten Bildes (1, 5),
- optische Aufzeichnung eines Oberflächenreliefbildhologramms (2) des gewünschten Bildes,
- Erzeugen einer Urform (6) aus Metall aus dem Bildhologramm (2) unter Verwendung eines elektroformenden Prozesses,
- Beschichten eines Polymermaterials für eine Rekombination mit einer elektroleitenden Schicht,
- danach mehrfaches Prägen der Urform (6) aus Metall auf der elektroleitenden Schicht für eine Vervielfältigung des Sicherheitsschutzhologramms (2), wodurch eine Polymerurformmatrix (7) erzeugt wird,
- Erzeugung einer Urformmatrix (8) aus Metall mit Nachbildungen des gewünschten Sicherheitsschutzhologramms (2) aus der Polymerurformmatrix (7) unter Verwendung eines elektroformenden Prozesses, wobei die Urformmatrix (8) aus Metall eine Anzahl von Nachbildungen des Bildhologramms (2) aufweist, und
- Erzeugung der Sicherheitsschutzhologramme (2) auf einer Polymerschichtoberfläche durch Prägen der Urformmatrix (8) aus Metall.

## Revendications

1. Procédé de production d'hologrammes de sécurité et de protection (2) comprenant les étapes de :
- produire une image désirée (1, 5),
- enregistrer optiquement un hologramme image à relief de surface (2) de l'image désirée,
- produire un maître métallique (6) à partir de l'hologramme image (2) en utilisant un procédé d'électroformage,
- revêtir un matériau polymère pour recombinaison avec une couche électroconductrice,
- ensuite estamper plusieurs fois le maître métallique (6) sur la couche électroconductrice pour dupliquer l'hologramme de sécurité et de protection (2), produisant ainsi une matrice maître polymère (7),
- produire une matrice maître métallique (8) comprenant des répliques de l'hologramme de sécurité et de protection (2) désiré à partir de la matrice maître polymère (7) en utilisant un procédé d'électroformage, dans lequel la matrice maître métallique (8) inclut un certain nombre de répliques des hologrammes images (2) et
- produire les hologrammes de sécurité et de protection (2) sur une surface de film polymère au moyen d'un estampage de la matrice maître métallique (8).
